# FASCICULE DE BREVET EUROPEEN

(11) **EP 1 022 488 B1**
(45) Date de publication et mention de la délivrance du brevet: **07.12.2005**
(21) Numéro de dépôt: 00400073.3
(22) Date de dépôt: 13.01.2000
(51) Int. Cl.: F16H 7/12

(54) **Tendeur pour courroie, circuit cinématique et moteur comportant un tel tendeur**
Spannvorrichtung für Treibriemen, kinematische Anordnung und Motor mit einer derartigen Vorrichtung
Tensioner for drive belt, kinematic circuit and engine comprising such tensioner

(30) Priorité: 25.01.1999 FR 9900778
(43) Date de publication de la demande: 26.07.2000
(73) Titulaire: HUTCHINSON, 75008 Paris (FR)
(72) Inventeur: Rointru, Claude, 37130 Mazieres de Touraine (FR); Defeings, Patrice, 37340 Ambillou (FR)
(74) Mandataire: Jacquard, Philippe Jean-Luc

(56) Documents cités:
- EP-A- 0 210 508
- GB-A- 724 522
- US-A- 4 416 648
- US-A- 4 765 444
- US-A- 5 004 448
- US-A- 5 073 158
- US-A- 5 601 505

## Description

La présente invention se rapporte principalement à un tendeur pour courroie, à un circuit cinématique et à un moteur comportant un tel tendeur.

Il est habituel de disposer un tendeur de courroie dans une chaîne cinématique comportant une courroie de transmission de mouvement entre une poulie menante et une ou des poulies menées. Un tel tendeur comporte habituellement un dispositif de type piston-cylindre de guidage en translation d'un premier ensemble solidarisé avec une première extrémité du tendeur, fixé directement ou indirectement au bloc moteur, par rapport à un deuxième ensemble solidarisé avec une seconde extrémité du tendeur portant un galet roulant sur la courroie, les deux ensembles étant entourés par un ressort hélicoïdal de rappel vers la position écartée desdits ensembles. Des moyens d'amortissement hydrauliques équipent les réalisations perfectionnées de tendeurs de types connus. De tels tendeurs, bien que donnant généralement satisfaction, sont d'un prix de revient élevé. De plus, certaines réalisations présentent un encombrement important et/ou une durée de vie limitée. En outre, la mise en oeuvre d'un ressort de rappel radialement externe impose de fixer le tendeur de type connu par l'une des extrémités dudit tendeur. Une telle fixation n'est pas nécessairement la plus rigide ni celle qui s'adapte le mieux à l'espace réduit disponible dans le compartiment moteur.

C'est par conséquent un but de la présente invention d'offrir un tendeur pour courroie ayant une structure simple.

C'est aussi un but de la présente invention d'offrir un tendeur susceptible de recevoir des moyens de fixation, sur tout ou partie de sa longueur.

C'est également un but de la présente invention d'offrir un tendeur pour courroie présentant une grande fiabilité et une longévité importante.

C'est aussi un but de la présente invention d'offrir un tel tendeur présentant un faible prix de revient.

Ces buts sont atteints par un tendeur **tel que défini dans la revendication 1**.

**Un tendeur selon le préambule de la revendication 1 est connu du Brevet US-A-5 004 448.**

**Le Brevet US-A-5 004 448 décrit un tendeur qui nécessite un dispositif supplémentaire pour produire une force de friction, à savoir un frein à friction comportant un ressort hélicoïdal.**

Avantageusement, une couche en matériau autolubrifiant, notamment en PTFE (polytétrafluorure d'éthylène), en matière plastique ou en élastomère est interposée entre la cage et la face en regard de la pièce portant le galet, de manière à diminuer, à augmenter ou à contrôler les frottements lors du coulissement de cette pièce dans la cage, de manière à assurer un guidage, et une friction procurant de l'amortissement au tendeur.

La présente invention a aussi pour objet un tendeur, caractérisé en ce l'élément de rappel élastique comporte un ressort hélicoïdal disposé à l'intérieur des moyens support des moyens d'appui sur la courroie.

La présente invention a également pour objet un tendeur, caractérisé en ce que les axes de l'élément d'ancrage, de l'élément de rappel élastique et des moyens support guidés en translation par l'élément d'ancrage sont confondus avec un axe longitudinal du tendeur.

La présente invention a aussi pour objet un tendeur, caractérisé en ce que l'élément d'ancrage comporte des ouvertures ou des oeillets de passage de boulons de fixation.

La présente invention a également pour objet un tendeur, caractérisé en ce que la cage est réalisée en tôle métallique et en ce que les ouvertures de passage de boulons sont ménagées dans des pattes réalisées en déployant la tôle de la cage à partir de découpes effectuées dans les parois latérales de la cage.

La présente invention a également pour objet un tendeur, caractérisé en ce que la couche intermédiaire est réalisée en élastomère.

La présente invention a aussi pour objet un tendeur, caractérisé en ce que la cage rigide et les moyens support ont une section sensiblement rectangulaire.

La présente invention a également pour objet un tendeur, caractérisé en ce que les moyens d'appui sur la courroie comportent un galet.

La présente invention a aussi pour objet un tendeur, caractérisé en ce qu'il comporte des moyens de verrouillage dans une condition compacte de stockage et de montage dans laquelle l'élément de rappel élastique est comprimé.

La présente invention a également pour objet un tendeur, caractérisé en ce que les moyens de verrouillage comportent un premier élément saillant solidaire de la cage, un second élément saillant solidaire des moyens support et une pièce amovible d'accouplement de ces deux éléments saillants.

La présente invention a aussi pour objet un tendeur, caractérisé en ce que les éléments saillants comportent des morceaux de tôle repliés de la cage et de moyens support et en ce que la pièce d'accouplement est une goupille passant par des ouvertures pratiquées dans lesdits éléments saillants.

La présente invention a également pour objet un tendeur, caractérisé en ce qu'il comporte des moyens de limitation de la course des moyens support des moyens d'appui sur la courroie pour les empêcher de sortir de la cage.

La présente invention a aussi pour objet un tendeur, caractérisé en ce que les moyens de limitation de la course comportent une avancée en tôle de la cage disposée sur le trajet d'un élément saillant en tôle de moyens support des moyens d'appui sur la courroie.

L'invention sera mieux comprise au moyen de la description ci-après et des figures annexées sur lesquelles:
- la figure 1 est une vue de face, sur laquelle le ressort de rappel n'est pas représenté, d'une première variante de réalisation d'un tendeur selon la présente invention dans une condition compacte de stockage et de montage ;
- la figure 2 est une vue de côté, avec arrachement partiel, du tendeur de la figure 1 dans une condition compacte de stockage et de montage ;
- la figure 3 est une vue de face du tendeur de la figure 1 dans une condition précontrainte ;
- la figure 4 est une vue de dessous du tendeur de la figure 1 dans une condition compacte de stockage et de montage;
- la figure 5 est une vue de face, dans une condition compacte de stockage et de montage d'une deuxième variante de réalisation du tendeur selon la présente invention ;
- la figure 6 est une vue de côté, avec arrachement partiel du tendeur de la figure 5 dans une condition compacte de stockage ou de montage ;
- la figure 7 est une vue de face du tendeur de la figure 5 dans une condition précontrainte ;
- la figure 8 est une vue de dessus du tendeur de la figure 5 dans une condition compacte de stockage et de montage ;
- la figure 9 est une vue de face d'une troisième variante de réalisation d'un tendeur selon la présente invention dans une condition compacte de montage ou de stockage ;
- la figure 10 est une vue de côté, avec arrachement partiel, du tendeur de la figure 9, dans une condition compacte de stockage et de montage ;
- la figure 11 est une vue de face, avec arrachement partiel, du tendeur de la figure 9 dans une condition précontrainte ;
- la figure 12 est une vue de dessus, avec arrachement partiel, du tendeur de la figure 9 dans une condition compacte de stockage et de montage ;
- la figure 13 est une vue de face, avec arrachement partiel, de l'exemple préféré de réalisation d'un tendeur selon la présente invention dans une condition précontrainte ;
- la figure 14 est une vue de côté, avec arrachement partiel, du tendeur de la figure 13 dans une condition compacte de stockage et de montage ;
- la figure 15 est une vue de dessus, avec arrachement partiel, du tendeur de la figure 13 dans une condition compacte de stockage et de montage.

Les figures 16a et 16b représentent respectivement en vue de face et en coupe et en vue de côté avec coupe partielle un autre exemple de réalisation de l'invention.

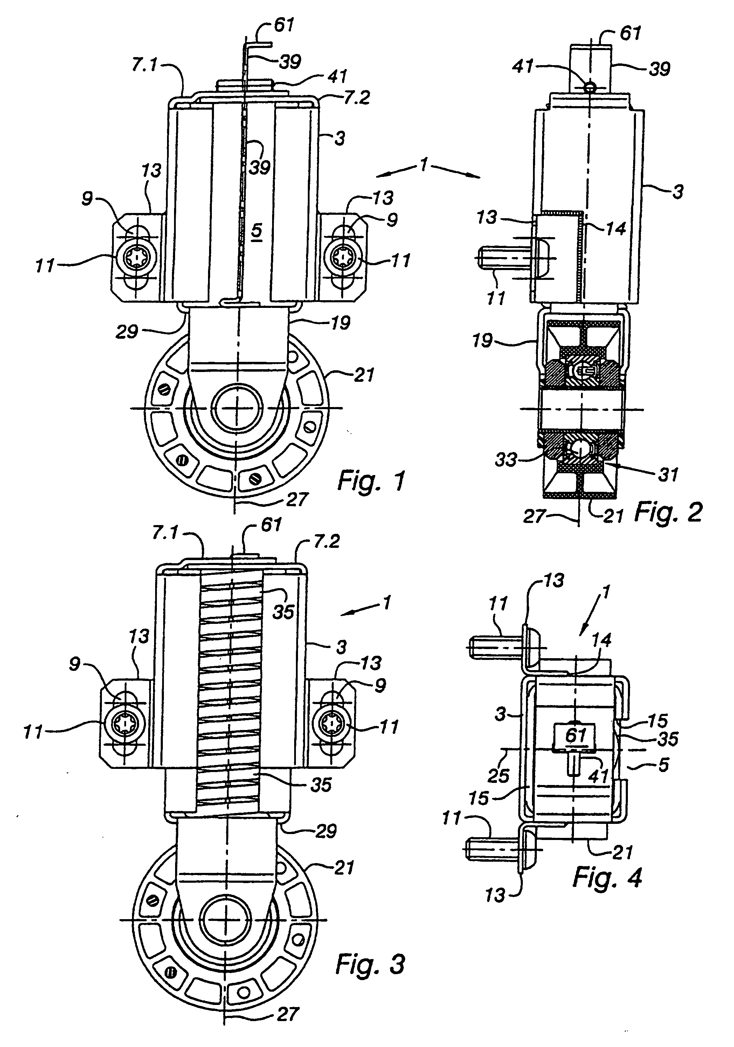

Sur les figures 1 à 16, on a utilisé les mêmes références pour désigner les mêmes éléments.

Sur les figures 1 à 5, on peut voir un tendeur 1 comportant une cage 3 avantageusement prismatique, par exemple en forme de parallélépipède rectangle à arêtes arrondies présentant une ouverture 5 sur la face avant.

La cage 3 est par exemple réalisée en tôle d'acier de 2 mm d'épaisseur et présente une hauteur de 70 mm et une base de 50 mm x 35 mm. L'extrémité supérieure de la cage est fermée par deux rebords 7.1 et 7.2 repliés à 90° et superposés sur une partie de leur longueur.

Le tendeur selon la présente invention est susceptible d'être solidarisé avec son support, notamment avec le bloc moteur d'un moteur thermique à combustion interne, par tous moyens de fixation connu.

Dans l'exemple préféré de réalisation, la solidarisation du tendeur selon la présente invention avec son support est assurée par des boulons 11 passant dans des ouvertures 9 pratiquées dans un élément solidarisé avec la cage 3. Les ouvertures 9 peuvent être circulaires. Toutefois, il est avantageux de mettre en oeuvre des ouvertures 9 de réception de boulons ayant une forme allongée selon des axes parallèles à l'axe du tendeur 1 permettant de fixer le tendeur selon la présente invention dans diverses positions et notamment de déplacer le tendeur 1 par rapport à des boulons de fixation de manière à rattraper les dispersions géométriques et tolérances de fabrication des accessoires entraînés par une courroie 23 ainsi que les tolérances de fabrication de cette courroie. De plus, un tendeur muni d'ouvertures allongées peut s'adapter, sans modification, à diverses configurations de moteurs.

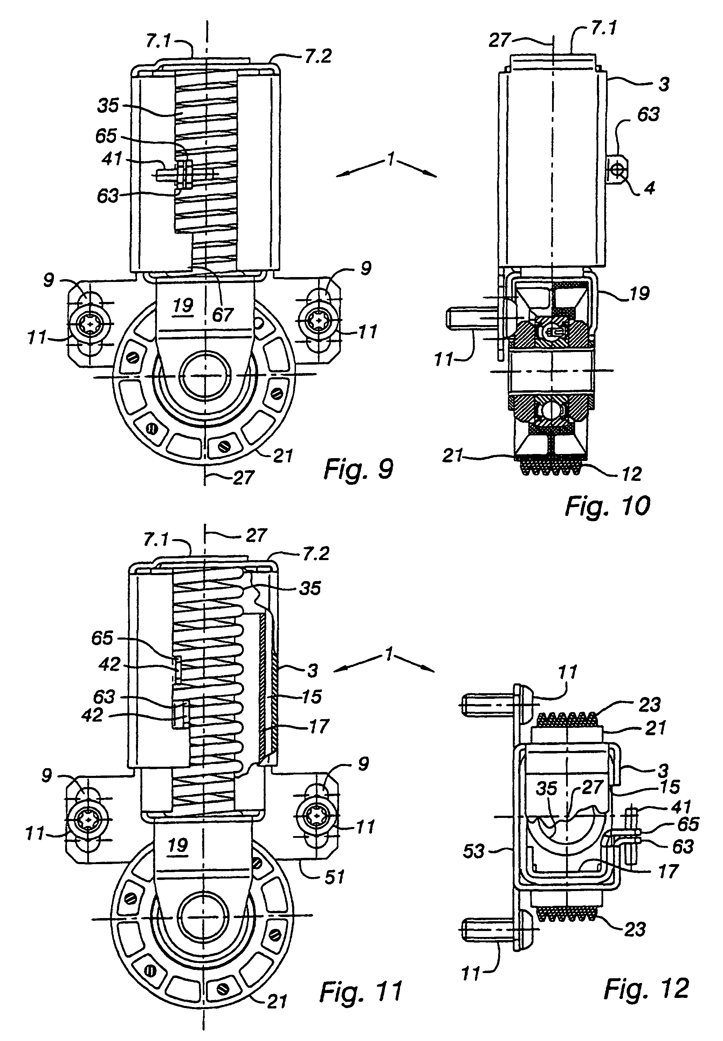

Dans les exemples de réalisation illustrés sur les figures 1 à 8, les ouvertures 9 sont pratiquées dans deux pattes 13 fixées, par exemple par soudure 14, aux parties inférieures des parois latérales de la cage 3. Dans l'exemple illustré sur les figures 9 à 12, les ouvertures 9 sont pratiquées dans un prolongement 51 d'une paroi arrière 53 de la cage 3.

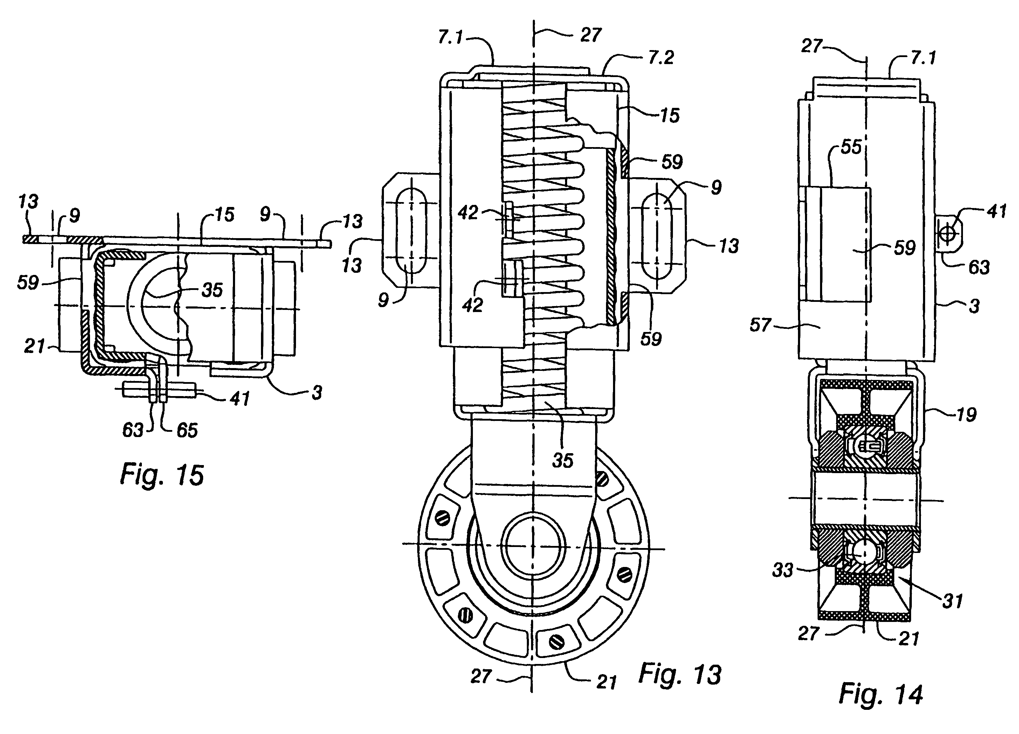

Dans l'exemple illustré sur les figures 13 à 15, les ouvertures 9 sont ménagées dans des pattes 13 réalisées en déployant la tôle métallique à partir des découpes 55 réalisées dans les parois latérales 57 de la cage 3.

Dans un exemple de réalisation non illustré, la paroi arrière 53 de la cage 3 présente une hauteur supérieure à celle des autres faces et comporte des ouvertures de réception de boulons de fixation.

Bien que la fixation par deux boulons 11 ait donné entière satisfaction, la mise en oeuvre d'un nombre supérieur d'ouvertures 9 et notamment d'une combinaison des ouvertures 9 pratiquées dans les divers exemples de réalisation du tendeur 1 ne sort pas du cadre de la présente invention.

La paroi interne de la cage 3 est garnie avec une couche 15 d'un matériau permettant de contrôler, notamment de réduire, les frottements lors du coulissement d'une pièce interne 17 portant par l'intermédiaire d'une chape 19, un galet 21 d'appui sur une courroie 23. Les frottements entre la pièce 17 et la cage 3 sont déterminés, notamment par la surface de contact et par le coefficient de frottement. Un coefficient de frottement faible et constant est obtenu par l'emploi du PTFE. Une augmentation de frottement entraîne une augmentation d'amortissement mais une baisse de la réponse en fréquence du tendeur selon la présente invention. Un fort coefficient de frottement est obtenu, par exemple, par la mise en oeuvre d'une couche 15 en élastomère, notamment du type caoutchouc naturel pour des températures de fonctionnement modérées, caoutchouc butadiène nitril, avantageusement chargé en produit lubrifiant tels que du graphite ou du HNBR (hydrogenated nitril butadiène ribber ou NBR en terminologie anglo-saxonne) recouvert d'une pellicule de lubrifiant telle que de la graisse. La couche 15 en élastomère a avantageusement une dureté comprise entre 60 et 90 Shore A. La couche 15 peut comporter des alvéoles formées par exemple par des motifs en relief délimitant des cavités rectangulaires de réception de lubrifiants telle que de la graisse. La pièce interne 17 et/ou la cage 3 comportent un élément de maintien en place de la couche 15 comme par exemple des picots ou un épaulement.

Dans l'exemple du tendeur selon la présente invention muni de découpes 55 (figures 13 à 15) la couche 15 est avantageusement munie d'une surépaisseur locale 59 disposée en vis-à-vis et pénétrant dans ces découpes permettant d'immobiliser axialement la couche 15. La couche 15 peut être munie sur une ou deux de ses faces de motifs asymétriques, par exemple en sapin, adaptés pour engendrer des coefficients de frottement différents selon le sens de déplacement relatif de la pièce interne 17 par rapport à la cage 3. Avantageusement, les frottements sont faibles lors de la détente du ressort 35 et plus forts lors de sa compression.

Il peut s'avérer avantageux d'utiliser une couche 15 dont l'épaisseur est légèrement supérieure à l'espace disponible entre la cage 3 et la pièce 17. La réaction de la couche 15 aux forces de compression entre la cage 3 et la pièce 17 augmente les coefficients de frottement et assure une réduction ou, avantageusement, un rattrapage de jeu entre la cage 3 et la pièce 17.

Dans un exemple de réalisation, la couche 15 comporte deux parties en forme de [ (crochet) disposé symétriquement par rapport à un plan vertical 25 passant par l'axe longitudinal 27 du tendeur et perpendiculaire à la face arrière 9 de la cage 3. Avantageusement, la couche 15 est monobloc et a, en coupe transversale, une forme sensiblement en C. La couche 15 s'étend d'un premier bord de l'ouverture 5, suit une première face latérale interne de la cage 3, la paroi arrière interne de la cage 3, une deuxième face latérale interne de la cage 3 et la face avant jusqu'à proximité d'un deuxième bord de l'ouverture 5.

Avantageusement, la couche 15 s'étend sur sensiblement sur toute la hauteur de la pièce 17. La couche 15 a par exemple une épaisseur de 2,15 mm.

La présente invention n'est pas limitée à la mise en oeuvre d'une couche 15 librement disposée entre la cage 3 et la pièce 17, mais s'étend au contraire à la mise en oeuvre d'une couche 15 adhérisée à la cage 3, à la pièce 17 ou aux deux. Dans ce dernier cas, l'amortissement n'est pas obtenu par frottement de la cage 3 et/ou de la pièce 17 sur la couche 15, mais par le travail, notamment en cisaillement de l'élastomère. La mise en oeuvre d'une couche 15 adhérisée simultanément sur la cage 3 et la pièce 17 permet, en variante, de simplifier le tendeur selon la présente invention dans la mesure où elle permet éventuellement d'éviter la mise en oeuvre de moyens de rappels élastiques supplémentaires tel qu'un ressort hélicoïdal. Dans un tel cas, pour permettre un débattement désiré, on peut utiliser une couche 15 ayant une épaisseur comprise entre 0,5 mm et 5 mm, de préférence comprise entre 0,8 mm et 3 mm et par exemple comprise entre 1,5 ou 2 mm.

La pièce 17 a une forme analogue à la forme de la couche 15, de préférence en C ou, comme illustré, en [ (crochet) symétrique par rapport au plan 25 et est terminée dans la partie inférieure par une section 29 parallèle aux rebords 7.1 et 7.2 de la cage 3. Sur la section 29 est fixé une chape 19 portant un galet 21 avantageusement muni d'un roulement 31 à billes 33. Une première extrémité d'un ressort hélicoïdal 35 prend appui sur le rebord 7.1 ou 7.2 de la cage 3, l'extrémité opposée du ressort 35 prenant appui sur la section 29 de la pièce 17. Ainsi, lorsque le tendeur 1 selon la présente invention est fixé, par exemple sur un bloc moteur, le ressort 35 applique le galet 21 sur la courroie 23 pour y exercer une tension nécessaire au bon fonctionnement par exemple d'un moteur thermique à combustion interne. Avantageusement, les axes longitudinaux de la cage 3, de la couche 15, de la pièce 17 et du ressort 35 sont confondus avec l'axe longitudinal 27 du tendeur 1. Avantageusement, les bords radialement externes du ressort 35 prennent appui sur les extrémités internes du [ (crochet) de la pièce 17 qui en assurent le guidage.

Le tendeur selon la présente invention est avantageusement muni d'un dispositif de mise en précontrainte formant, de préférence, des moyens de limitation de la course de la pièce 17 pour éviter qu'elle ne sorte de la cage 3.

Dans l'exemple de réalisation illustré sur les figures 1 à 4, le dispositif de mise en précontrainte comporte une tige ou un feuillard 39 axial reliant la chape 19 aux rebords 7.1 et 7.2 qu'il traverse et comportant une ouverture 42 de passage d'une goupille 41. La compression du ressort par la tige 39 et la goupille 41 facilite la mise en place du tendeur 1 selon la présente invention et son application sur la courroie 23. Le retrait de la goupille 41 libère le ressort 35 pour assurer le tensionnement de la courroie 23. Avantageusement, l'extrémité de la tige ou du feuillard 39 opposée à la chape 19 (extrémité supérieure dans les exemples illustrés) est munie d'un moyen d'arrêt assurant la limitation de la course de la pièce 17 pour éviter qu'elle ne sorte de la cage 3. Dans l'exemple illustré, les moyens d'arrêt 61 consistent en une zone repliée à angle droit de la tige ou du feuillard 61.

Pour la clarté de la figure 1, le ressort 35 n'est pas illustré sur cette figure, laissant apparaître la tige ou le feuillard 39.

Le tendeur selon la présente invention peut être muni de moyens de stockage de la goupille 41 après son retrait, par exemple au niveau de l'axe du roulement 31.

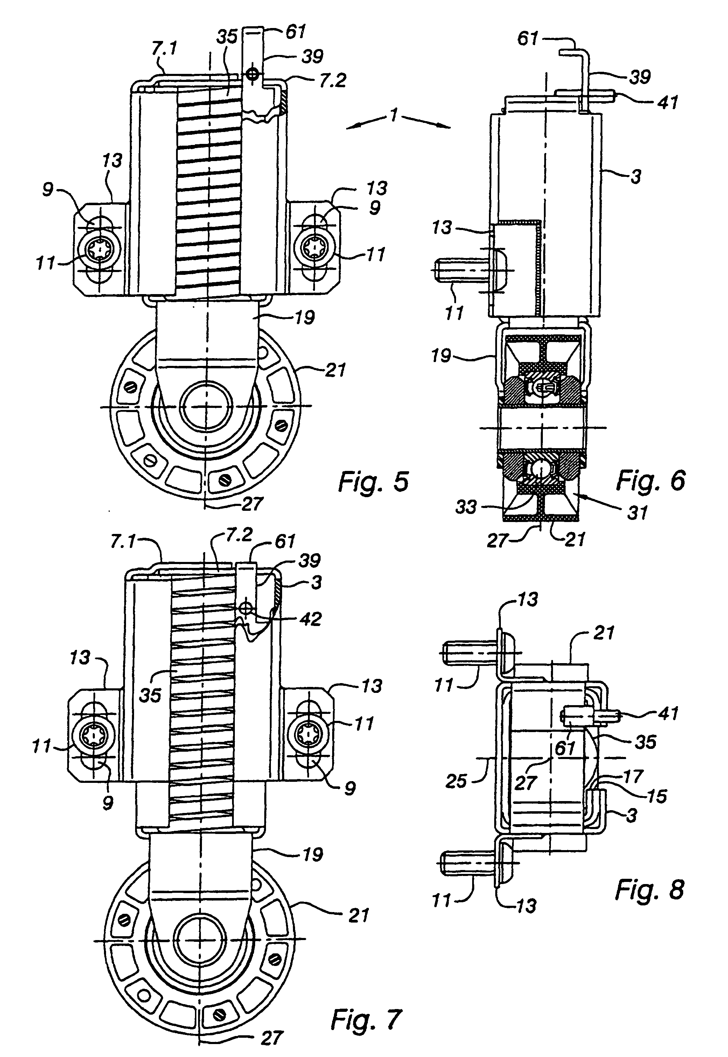

L'exemple de réalisation du tendeur selon la présente invention illustré sur les figures 5 à 8 comporte un feuillard latéral disposé parallèlement à la face avant du tendeur.

Le feuillard 39 des figures 5 à 8 comporte également une ouverture de réception de la goupille 41 en position de stockage et de montage ainsi qu'une zone repliée 61 assurant la limitation de la course de la pièce 17 par rapport à la cage 3.

Dans les exemples de réalisation illustrés sur les figures 9 à 15, la cage 3 est munie d'un élément saillant 63 alors que la pièce 17 est munie d'un élément saillant 65 disposés de manière à ce que, en condition de stockage et de montage illustrées sur les figures 9, 10, 12, 14 et 15, les éléments saillants 63 et 65 se trouvent en vis-à-vis permettant la mise en place d'un élément d'accouplement de ces éléments, immobilisant la pièce 17 dans la cage 3 dans la position désirée.

Dans l'exemple préféré de réalisation, les éléments saillants 63 et 65 correspondent à des éléments en tôle repliée à angle droit par rapport à la paroi avant de la cage 3 parallèlement l'un par rapport à l'autre. Une ouverture 42 de réception d'une goupille 41 est pratiquée dans les éléments saillants 63 et 65.

Avantageusement, la face avant de la cage 3 comporte une avancée 67 réduisant dans la partie inférieure la largeur de l'ouverture 5. L'avancée 67 est disposée dans un plan orthogonal à l'élément saillant 65 dont elle limite la course vers le bas, en condition précontrainte illustrée sur les figures 11 et 13.

Il est bien entendu que la mise en oeuvre d'autres dispositifs de mise en précontrainte du tendeur selon la présente invention par exemple du type tige filetée-écrou ou fourchette reliant la chape 19 à un élément de la cage 3 ne sort pas du cadre de la présente invention.

Le tendeur 1 selon l'invention est d'une construction simple et par suite fiable, présente un encombrement limité et est particulièrement facile à disposer dans le compartiment moteur d'un véhicule automobile.

De plus, les exemples préférés de réalisation décrits et illustrés sont dépourvus de moyens pneumatiques et hydrauliques d'amortissement de vibrations. Il en résulte qu'ils peuvent fonctionner dans toutes positions et pas seulement dans la position verticale avec chape 19 dirigée vers le bas telle qu'illustrée, mais également en biais, à l'horizontal ou, au contraire, en position verticale, chape 19 dirigée vers le haut.

Il est bien entendu que la présente invention n'est nullement limitée aux exemples préférés décrits. Au contraire, la pièce 17 et/ou la cage 3 peuvent être réalisées par un moulage, notamment en alliage léger, en matière plastique ou en matériau composite ou autre. Le ressort hélicoïdal 35 peut être remplacé ou complété par un ressort à lame, une couche d'élastomère, des moyens de rappels hydrauliques et/ou pneumatiques.

De même, il est possible, sans sortir du cadre de la présente invention, de munir le tendeur selon la présente invention d'un dispositif d'amortissement pneumatique ou hydraulique de type connu.

Il est bien entendu que la présente invention n'est pas limitée à la mise en oeuvre d'un ressort 35 travaillant en compression, mais s'étend également à un tendeur muni d'un ressort travaillant en traction dont une première extrémité est ancrée sur une cage 3 et dont une seconde extrémité, opposée à la première extrémité, est ancrée sur la chape 19 porte-galets 21.

Le corps du tendeur selon la présente invention peut avoir une section quelconque, notamment une section polygonale régulière ou non, une section circulaire, elliptique ou autre.

La présente invention s'applique notamment à l'industrie mécanique.

La présente invention s'applique principalement à l'industrie automobile, le tendeur selon la présente invention est susceptible d'être utilisé dans la chaîne cinématique de distribution et/ou de transmission d'un moteur automobile.

L'invention permet de réaliser un tendeur dans lequel les éléments support fixe 3, mobiles 19 et/ou 29, et le galet 21 sont coaxiaux.

Le galet 21 peut être monté directement sur la partie mobile sans pièce intermédiaire.

Un ou des éléments tel que la couche 15, par exemple en élastomère, interposé entre les parties fixes 3 et mobiles, permet d'assurer un guidage et une friction procurant un amortissement du tendeur. Cette couche 15 peut présenter une épaisseur sensiblement supérieure à l'espace disponible entre la cage 3 et les moyens support 17,19.

On notera que les parties fixes 3,13, et mobiles 19,29 ne sont pas forcément rectangulaires. Elles peuvent être par exemple de forme cylindrique ou quasi-cylindrique.

Les pièces peuvent être en tôle métallique, mais peuvent être également réalisées autrement, par exemple sous forme de profils moulés.

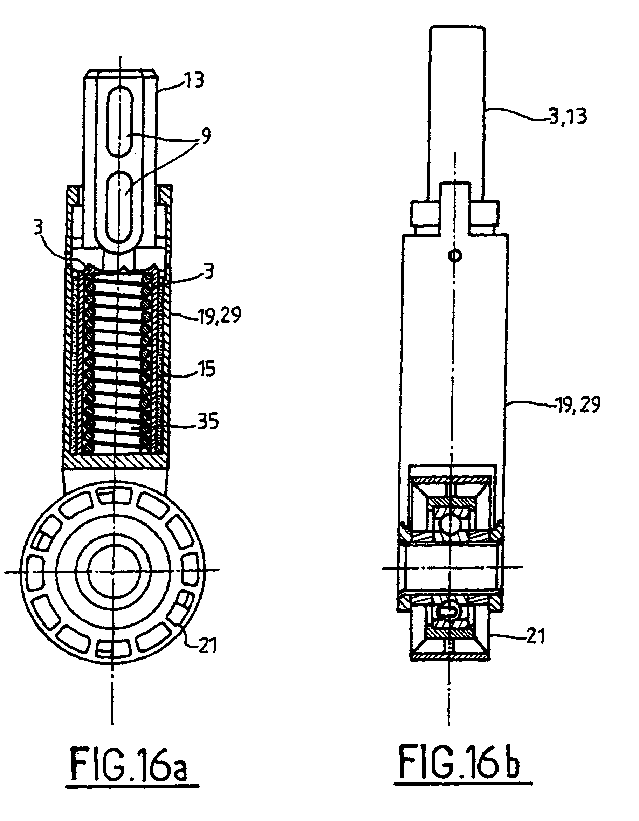

Les figures 16a et 16b représentent une variante selon laquelle la pièce mobile 19,29 coulisse extérieurement par rapport à la pièce fixe 3,13.

## Revendications

1. Tendeur pour courroie (23) comportant:
- des moyens (21) d'appui sur une courroie (23) de transmission de mouvement ;
- un élément d'ancrage (3, 13);
- un élément de rappel élastique (35) d'application des moyens d'appui (21) sur la courroie (23) de transmission de mouvement ; dans lequel l'élément d'ancrage (3) comporte une cage rigide de guidage en translation des moyens support (17,19) des moyens d'appui (21) sur la courroie (23) et dans lequel l'élément de rappel élastique (35) est un élément interne à ladite cage rigide (3), et comportant également une couche (15) interposée entre la cage rigide (3) et les moyens support (17),
**caractérisé en ce que** ladite couche (15) est réalisée en matériau élastomère et a une épaisseur supérieure à celle de l'espace disponible entre la cage rigide (3) et les moyens support (17) pour assurer à la fois un guidage, et une friction procurant un amortissement du tendeur.

2. Tendeur selon la revendication 1, **caractérisé en ce** l'élément de rappel élastique (35) comporte un ressort hélicoïdal disposé à l'intérieur des moyens support (17) des moyens d'appui (21) sur la courroie (23).

3. Tendeur selon la revendication 1 ou 2, **caractérisé en ce que** les axes de l'élément d'ancrage (3), de l'élément de rappel élastique (35) et des moyens support (17) guidés en translation par l'élément d'ancrage (3) sont confondus avec un axe (27) longitudinal du tendeur (1).

4. Tendeur selon l'une quelconque des revendications précédentes, **caractérisé en ce que** l'élément d'ancrage (3) comporte des ouvertures (9) ou des oeillets de passage de boulons de fixation (11).

5. Tendeur selon la revendication 4, **caractérisé en ce que** la cage (3) est réalisée en tôle métallique et **en ce que** les ouvertures (9) de passage de boulons (11) sont ménagées dans des pattes (13) réalisées en déployant la tôle de la cage (3) à partir de découpes (55) effectuées dans les parois latérales (57) de la cage (3).

6. Tendeur selon l'une quelconque des revendications précédentes, **caractérisé en ce que** la cage rigide (3) et les moyens support (17) ont une section sensiblement rectangulaire.

7. Tendeur selon l'une quelconque des revendications précédentes, **caractérisé en ce que** les moyens d'appui (21) sur la courroie (23) comportent un galet.

8. Tendeur selon l'une quelconque des revendications précédentes, **caractérisé en ce qu'**il comporte des moyens de verrouillage (39, 41, 42, 63, 65) dans une condition compacte de stockage et de montage dans laquelle l'élément de rappel élastique (35) est comprimé.

9. Tendeur selon la revendication 8, **caractérisé en ce que** les moyens de verrouillage comportent un premier élément saillant (63) solidaire de la cage (3), un second élément saillant solidaire des moyens support (17) et une pièce amovible d'accouplement (41) de ces deux éléments saillants (63, 65).

10. Tendeur selon la revendication 9, **caractérisé en ce que** les éléments saillants (63, 65) comportent des morceaux de tôle repliés de la cage (3) et de moyens support (17) et **en ce que** la pièce d'accouplement (41) est une goupille passant par des ouvertures (42) pratiquées dans lesdits éléments saillants.

11. Tendeur selon l'une quelconque des revendications précédentes, **caractérisé en ce qu'**il comporte des moyens (61, 67) de limitation de la course des moyens support (17) des moyens d'appui (21) sur la courroie (23) pour les empêcher de sortir de la cage (3).

12. Tendeur selon la revendication 11, **caractérisé en ce que** les moyens de limitation de la course comportent une avancée (67) en tôle de la cage (3) disposée sur le trajet d'un élément saillant (65) en tôle de moyens support (17) des moyens d'appui (21) sur la courroie (23).

13. Tendeur selon l'une quelconque des revendications précédentes, **caractérisé en ce que** l'élément d'ancrage (13), les moyens support (17) et les moyens d'appui (21) sont coaxiaux.

## Patentansprüche

1. Spannstück für einen Treibriemen (23) enthaltend:
- Einrichtungen (21) zum Abstützen auf einem Treibriemen (23) zur Bewegungsübertragung;
- ein Verankerungselement (3, 13);
- ein elastisches Rückstellelement (35) zum Aufdrücken der Stützeinrichtungen (21) auf den Treibriemen (23) zur Bewegungsübertragung; worin das Verankerungselement (3) ein festes Gehäuse zur Translationsführung von Trageinrichtungen (17, 19) der Stützeinrichtungen (21) auf dem Treibriemen (23) enthält und worin das elastische Rückstellelement (35) ein inneres Element des besagten festen Gehäuses (3) ist, und wobei es ebenfalls eine Schicht (15) enthält, die zwischen dem festen Gehäuse (3) und den Trageinrichtungen (17) angeordnet ist, **dadurch gekennzeichnet, dass** diese Schicht (15) aus einem Elastomermaterial hergestellt ist und eine Dicke aufweist, die über der des Raumes liegt, der zwischen dem festen Gehäuse (3) und den Trageinrichtungen (17) verfügbar ist, um zugleich eine Führung und eine Reibung, die für eine Dämpfung des Spannstücks sorgt, zu gewährleisten.

2. Spannstück nach Anspruch 1, **dadurch gekennzeichnet, dass** das elastische Rückstellelement (35) eine zylindrische Schraubenfeder enthält, die im Inneren der Trageinrichtungen (17) der Stützeinrichtungen (21) auf dem Treibriemen (23) angeordnet ist.

3. Spannstück nach Anspruch 1 oder 2, **dadurch gekennzeichnet, dass** die Achsen des Verankerungselements (3), des elastischen Rückstellelements (35) und der Trageinrichtungen (17), die von dem Verankerungselement (3) bei der Translationsbewegung geführt werden, mit einer Längsachse (27) des Spannstücks (1) zusammenlaufen.

4. Spannstück nach einem der vorstehenden Ansprüche, **dadurch gekennzeichnet, dass** das Verankerungselement (13) Öffnungen (9) oder Ösen zum Durchlass von Befestigungsschrauben oder -bolzen (11) enthält.

5. Spannstück nach Anspruch 4, **dadurch gekennzeichnet, dass** das Gehäuse (3) aus einem Metallblech hergestellt ist und dass die Öffnungen (9) zum Durchlass der Schrauben oder Bolzen (11) in Haltern (13) angeordnet sind, die hergestellt werden durch Ausbreiten des Blechs des Gehäuses (3) von Ausstanzungen (55) ausgehend, die in den Seitenwänden (57) des Gehäuses (3) ausgebildet sind.

6. Spannstück nach einem der vorstehenden Ansprüche, **dadurch gekennzeichnet, dass** das feste Gehäuse (3) und die Trageinrichtungen (17) einen etwa rechtwinkligen Abschnitt aufweisen.

7. Spannstück nach einem der vorstehenden Ansprüche, **dadurch gekennzeichnet, dass** die Stützeinrichtungen (21) auf dem Treibriemen (23) einen Rollkörper enthalten.

8. Spannstück nach einem der vorstehenden Ansprüche, **dadurch gekennzeichnet, dass** es Einrichtungen (39, 41, 42, 63, 65) zum Verriegeln in einem kompakten Lager- und Montagezustand enthält, in dem das elastische Rückstellelement (35) komprimiert ist.

9. Spannstück nach Anspruch 8, **dadurch gekennzeichnet, dass** die Verriegelungseinrichtungen ein erstes zum Gehäuse gehörendes vorspringendes Element (63), ein zweites zu den Trageinrichtungen gehörendes vorspringendes Element (65) und ein bewegliches Verbindungsstück (41) dieser beiden vorspringenden Elemente (63, 65) enthalten.

10. Spannstück nach Anspruch 9, **dadurch gekennzeichnet, dass** die vorspringenden Elemente (63, 65) Blechstücke enthalten, die von dem Gehäuse (3) und von den Trageinrichtungen (17) abgebogen sind und **dadurch**, dass das Verbindungsstück (41) ein größerer Stift ist, der durch die Öffnungen (42) hindurch geht, die in den vorspringenden Elementen ausgebildet sind.

11. Spannstück nach einem der vorstehenden Ansprüche, **dadurch gekennzeichnet, dass** es Einrichtungen (61, 67) zur Begrenzung des Wegs der Trageinrichtungen (17) der Stützeinrichtungen (21) auf dem Treibriemen (23) umfasst, um diese davon abzuhalten, aus dem Gehäuse (3) auszutreten.

12. Spannstück nach Anspruch 11, **dadurch gekennzeichnet, dass** die Wegbegrenzungseinrichtungen ein vorspringendes Ende (67) aus Blech des Gehäuses (3) enthalten, angeordnet auf dem Weg eines vorspringenden Elementes (65) aus Blech der Trageinrichtungen (17) der Stützeinrichtungen (21) auf dem Treibriemen (23).

13. Spannstück nach einem der vorstehenden Ansprüche, **dadurch gekennzeichnet, dass** das Verankerungselement (13), die Trageinrichtungen (17) und die Stützeinrichtungen (21) koaxial zueinander liegen.

## Claims

1. A tensioner for a belt (23), the tensioner comprising:
· bearing means (21) for bearing against a drive belt (23);
· an anchor element (3, 13); and
· a resilient return element (35) for pressing the bearing means (21) against the drive belt (23); in which the anchor element (3) comprises a rigid cage for translation guiding of support means (17, 19) for supporting the means (21) for bearing against the belt (23), and in which the resilient return element (35) is an element internal to said rigid cage (3), and also including a layer (15) interposed between the rigid cage (3) and the support means (17), the tensioner being **characterized in that** said layer (15) is made of elastomer material and is of thickness that is greater than the thickness of the space available between the rigid cage (3) and the support means (17) so as to provide both guidance and friction to damp the tensioner.

2. A tensioner according to claim 1, **characterized in that** the resilient return element (35) comprises a helical spring disposed inside the support means (17) for the means (21) for bearing on the belt (23).

3. A tensioner according to claim 1 or 2, **characterized in that** the axes of the anchor element (3), of the resilient return element (35), and of the support means (17) guided in translation by the anchor element (3) coincide with a longitudinal axis (27) of the tensioner (1).

4. A tensioner according to any preceding claim, **characterized in that** the anchor element (3) has openings (9) or eyelets for passing fixing bolts (11).

5. A tensioner according to claim 4, **characterized in that** the cage (3) is made of sheet metal, and **in that** the openings (9) for passing bolts (11) are formed in tabs (13) made by splaying out the sheet metal of the cage (3) by means of cutouts (55) made in the side walls (57) of the cage (3).

6. A tensioner according to any preceding claim, **characterized in that** the rigid cage (3) and the support means (17) are substantially rectangular in section.

7. A tensioner according to any preceding claim, **characterized in that** the means (21) for bearing against the belt (23) include a wheel.

8. A tensioner according to any preceding claim, **characterized in that** it includes locking means (39, 41, 42, 63, 65) for locking it in a compact storage and mounting condition in which the resilient return element (35) is compressed.

9. A tensioner according to claim 8, **characterized in that** the locking means comprise a first projecting element (63) secured to the cage (3), a second projecting element secured to the support means (17), and a removable coupling part (41) for coupling said projecting elements (63, 65) together.

10. A tensioner according to claim 9, **characterized in that** the projecting elements (63, 65) include pieces of sheet metal folded from the cage (3) and from the support means (17), and **in that** the coupling part (41) is a pin passing through holes (42) formed in said projecting elements.

11. A tensioner according to any preceding claim, **characterized in that** it includes stroke-limiting means (61, 67) for limiting the stroke of the support means (17) for the means (21) for bearing against the belt (23) so as to prevent them from leaving the cage (3).

12. A tensioner according to claim 11, **characterized in that** the stroke-limiting means include a sheet metal extension (67) of the cage (3) placed on the path of a projecting sheet metal element (65) of the support means (17) for the means (21) for bearing against the belt (23).

13. A tensioner according to any preceding claim, **characterized in that** the anchor element (13), the support means (17), and the bearing means (21) all lie on a common axis.
